## Europäisches Patentamt

## European Patent Office

## Office européen des brevets

(11) Veröffentlichungsnummer : **0 053 382**
**B1**

(12) **EUROPÄISCHE PATENTSCHRIFT**

(45) Veröffentlichungstag der Patentschrift :
03.04.85

(21) Anmeldenummer : **81109986.0**

(22) Anmeldetag : **28.11.81**

(51) Int. Cl.⁴ : **G 01 M   3/18**

(54) **Kontrollsystem zur Lecküberwachung von Rohrleitungen.**

(30) Priorität : **01.12.80 DE 3045257**

(43) Veröffentlichungstag der Anmeldung :
**09.06.82 Patentblatt 82/23**

(45) Bekanntmachung des Hinweises auf die Patenterteilung : **03.04.85 Patentblatt 85/14**

(84) Benannte Vertragsstaaten :
**AT BE CH DE FR GB IT LI SE**

(56) Entgegenhaltungen :
**EP-A- 0 045 888**
**PATENTS ABSTRACTS OF JAPAN, Band 2, Nr. 116, 27. September 1978, Seite 6578E78**

(73) Patentinhaber : **Schmitz, Friedhelm**
**Schillerweg 4**
**D-5883 Kierspe (DE)**

(72) Erfinder : **Schmitz, Friedhelm**
**Schillerweg 4**
**D-5883 Kierspe (DE)**

(74) Vertreter : **Hassler, Werner, Dr.**
**Postfach 17 04 Asenberg 62**
**D-5880 Lüdenscheid (DE)**

**Beschreibung**

Die Erfindung betrifft ein Kontrollsystem zur Lecküberwachung von mit einem Wärmeisoliermantel umkleideten Rohrleitungen, bei dem abschnittweise Meßsonden mit je zwei Elektroden angeordnet sind, die an eine Meßschaltung angeschlossen sind.

Ein Kontrollsystem mit einer als Hochfrequenzleitung ausgebildeten Meßleitung ist in der DE-A-26 19 042 und der DE-A-27 25 224 beschrieben. Im Störungsfall wird eine die Leiter trennende Folie beschädigt, so daß sich die Dämpfungseigenschaften der Meßleitung ändern. Dadurch können die Störung und der Störungsort nachgewiesen werden.

Ein Kontrollsystem der eingangs genannten Art ist in der US-A-3 882 382 beschrieben. Dort bildet die Meßsonde einen Teil des Isoliermantels. Die Elektroden sind an eine Spannung angeschlossen. Austretendes Medium soll eine Widerstandsänderung zwischen den Elektroden verursachen. Bei der Überwachung von Dampfrohren muß der Raum zwischen den Elektroden durch einen Elektrolyten ausgefüllt sein. Dieses Kontrollsystem ist in seinem Ansprechverhalten unsicher. Bei Verwendung eines Elektrolyten kann Umgebungsfeuchtigkeit Störungen verursachen. Andererseits läßt sich ein Ausfall einer Meßsonde nicht ohne weiteres erkennen. Ein ähnliches Kontrollsystem ist in DE-U-80 11 887 beschrieben. Dort soll austretendes Medium den Widerstand einer Meßleitung ändern.

Aus der EP-A-0 045 888 (Stand der Technik nach Art. 54(3) EPÜ für alle benannten Vertragsstaaten) ist ein Kontrollsystem der eingangs genannten Art bekannt. Der Wärmeisoliermantel weist eine Meßkammer auf, in die die Meßsonden einsetzbar sind, und jede Meßsonde ist mit einem Steckverbinder oder Anschlußklemmen zur Verbindung mit der Meßschaltung versehen. Bei diesem Kontrollsystem befindet sich der Meßraum auf der heißen Seite der Wärmeisolierung, so daß die Montage und die Wartung erschwert sind.

Aufgabe der Erfindung ist eine solche Ausbildung des Kontrollsystem, daß die Meßsonden von außen, d. h. von der kalten Seite montiert, gewartet und ausgetauscht werden können und daß ein momentanes Ansprechen auf austretendes medium, das die Dielektrizitätskonstante im Meßraum ändert, gewährleistet ist.

Diese Aufgabe wird nach der Erfindung durch folgende Merkmale gelöst :

a) der Wärmeisoliermantel weist nach der Außenseite offene Meßkammern auf ;

b) die Meßsonden sind lösbar in die Meßkammern einsetzbar ;

c) jede Meßsonde besitzt einen Steckverbinder oder Anschlußklemmen zur Verbindung mit der Meßschaltung ;

d) die Elektroden bilden ein frequenzbestimmendes Element eines Oszillators.

Dieses Kontrollsystem spricht momentan auf durch ein Leck austretendes Medium, insbesondere Dampf an. Derselbe verändert die Dielektrizitätskonstante und damit die Kapazität zwischen den beiden Elektroden der Meßsonde, so daß sich die Frequenz des Oszillators ändert. Die Meßsonde kann von der Außenseite des Isoliermantels angebracht werden, so daß sie im Betrieb ausgetauscht und gewartet werden kann. Die Meßsonden sind ohne Eingriff in den Isoliermantel zugänglich, sowie montierbar und demontierbar.

Im einzelnen sieht die Erfindung vor, daß die Meßelektroden zu einem Schwingkreis gehören, der an einen Frequenz-Spannungs-Wandler angeschlossen ist, daß der Ausgang des Frequenz-Spannungs-Wandlers an eine Differentiationsstufe mit einer Zeitkonstanten zwischen 0,5 und 10 min angeschlossen ist und daß die differenzierte Spannung an eine Schwellenwertschaltung mit nachgeschalteter Alarmstufe und/oder Auslösestufe angeschlossen ist. Die Differentiation unterdrückt eine Signalauslösung durch Langzeitänderungen, also etwa Änderungen, die von Schwankungen der relativen Feuchtigkeit herrühren, oder Änderungen, die sich aus einem Temperaturanstieg und Änderungen der Feuchtigkeit beim Anfahren der Anlage aus dem kalten Zustand ergeben.

Für eine Kassettenisolierung schlägt die Erfindung vor, daß Isolierkassetten an ihren Stirnenden äußere Umfangsstufen aufweisen, wobei die einander zugewandten Umfangsstufen benachbarter Isolierkassetten die Meßkammer ringförmig ausbilden, daß ein als erste Elektrode dienendes, metallisches Spannband die Meßkammer überdeckt und mit einem Spannhebelverschluß verschlossen ist und daß die zweite Elektrode durch an dem Spannband befestigte Isolatoren getragen ist Damit dient das Spannband der Meßsonde gleichzeitig zur Festlegung und Halterung der Isolierkassetten. Eine besondere Befestigung der Isolierkassetten ist entbehrlich.

Im weiterer Ausbildung sieht die Erfindung vor, daß in den Wärmeisoliermantel ein gegebenenfalls durch ein Aufnahmerohr ausgekleidetes Loch eingebracht ist und daß eine rohrförmige Meßsonde mit einer Außenelektrode und einer inneren Elektrode oder einer Stiftelektrode in die durch das Loch gebildete Meßkammer eingesetzt ist. Bei dieser Ausführungsform ist die Meßsonde besonders leicht austauschbar. Sie kann jederzeit zu Wartungs- oder Reinigungszwecken herausgenommen werden. Es ist nicht erforderlich, die Anlage abzuschalten, vielmehr kann die Meßsonde im laufenden Betrieb installiert und ausgetauscht werden. Eine derartige Meßkammer kann in einer Isolierkassette angeordnet werden. Andererseits ist es möglich eine solche Meßkammer auch in einem vor Ort aufgebrachten und fertiggestellten Isoliermantel vorzusehen ; dabei wird ein die Meßkammer bildendes Loch aus dem Isoliermantel ausgenommen.

In weiterer Ausbildung sieht die Erfindung vor, daß die Elektroden mindestens teilweise perforiert sind. Dadurch ist sichergestellt, daß austretendes Medium besonders schnell in den Meßraum zwischen den Elektroden gelangt, auch wenn die Meßsonde unmittelbar in das Isoliermaterial der Isolierschicht eingebettet ist.

Damit die Meßsonde leicht und sicher gereinigt werden kann, sieht die Erfindung vor, daß die Bauteile der Meßsonde aus nichtporösen, chemisch resistenten, anorganischen Werkstoffen bestehen. Diese Ausbildung der Meßsonde ermöglicht eine Reinigung und/oder Dekontaminierung, auch wenn Teile der Meßsonde durch Gifte, Verunreinigungen oder radioaktives Material verseucht sind. Die chemische Resistenz bezieht sich auf übliche Reinigungsmittel wie Säuren und Laugen. Die Meßsonde ist somit leicht dekontaminierbar.

Zur Erhöhung der Korrosionsfestigkeit und der Lebensdauer der Meßsonde schlägt die Erfindung vor, daß die Werkstoffe der Meßsonde so ausgewählt sind, daß sich kein galvanisches Element bildet.

Damit ein Leck momentan nachgewiesen werden kann, schlägt die Erfindung vor, daß innerhalb des Wärmeisoliermantels in radialer oder axialer Richtung der Rohrleitung verlaufende Expansionsräume vorgesehen sind, von denen Durchgänge zu dem Meßraum führen.

Zum Schutz vor einem Fehlalarm und einer Fehlauslösung sieht die Erfindung die Erfassung einer unabhängigen zweiten Meßgröße derart vor, daß innerhalb des Meßraumes ein Temperaturfühler angeordnet ist, der eine temperaturabhängige elektrische Meßspannung abgibt.

Die Auswerteschaltung für diesen Temperaturfühler ist nach der Erfindung so ausgestaltet, daß der Temperaturfühler an eine Differentiationsstufe angeschlossen ist, und daß deren Ausgang mit einer Schwellenwertschaltung und nachgeschalteter Alarmstufe und/oder Auslösestufe verbunden ist.

Die Erfindung sieht schließlich eine kombinierte Auswertung der Signale der Meßelektroden und der Temperaturmessung in der Weise vor, daß die Ausgänge der Schwellenwertschaltungen in einer Oder-Schaltung verknüpft sind, an die eine gemeinsame Alarmstufe und/oder Auslösestufe angeschlossen ist.

Das Kontrollsystem nach der Erfindung spricht sehr schnell auf alle Änderungen der Meßwerte an, die auf ein Leck der Rohrleitung hinweisen. Die beiden unabhängigen Meßwerte werden in der Weise miteinander verknüpft, daß bereits die Abweichung eines Meßwertes zu einem Signal führt. Die Unterdrückung von Langzeitänderungen oder langsam ablaufenden Änderungen stellt sicher, daß eine langsame Änderung der Meßwerte im Anfahrbetrieb kein Signal bewirkt. Weil sich die Dielektrizitätskonstante nur langsam ändert, so daß innerhalb der vorgebenen Zeitkonstanten keine Signaländerung auftritt, die zur Auslösung der Schwellenwertschaltung führen könnte. Gleiches gilt für die langsame Temperaturerhöhung im Anfahrbetrieb. Neben und unabhängig von einer Alarmanzeige stellt die Erfindung eine Auslösefunktion bereit, die die Abschaltung der gesamten Anlage ermöglicht.

Ausführungsformen der Erfindung werden im folgenden unter Bezugnahme auf die anliegenden Zeichnungen erläutert, in denen darstellen :

Figur 1 einen Längsschnitt durch eine Rohrleitung mit Isoliermantel und einer ersten Ausführungsform einer Meßsonde,

Figur 2 eine Umklappung zu Fig. 1,

Figur 3 die Darstellung der Meßsonde nach Fig. 1 in vergrößertem Maßstab,

Figur 4 einen Schnitt durch die Meßsonde nach Fig. 3,

Figur 5 eine weitere Ausführungsform einer Meßsonde,

Figur 6 eine weitere Ausführungsform einer Meßsonde,

Figur 7 ein Kontrollsystem mit Auswerteschaltung und

Figur 8 eine weiter Ausführungsform einer Meßsonde.

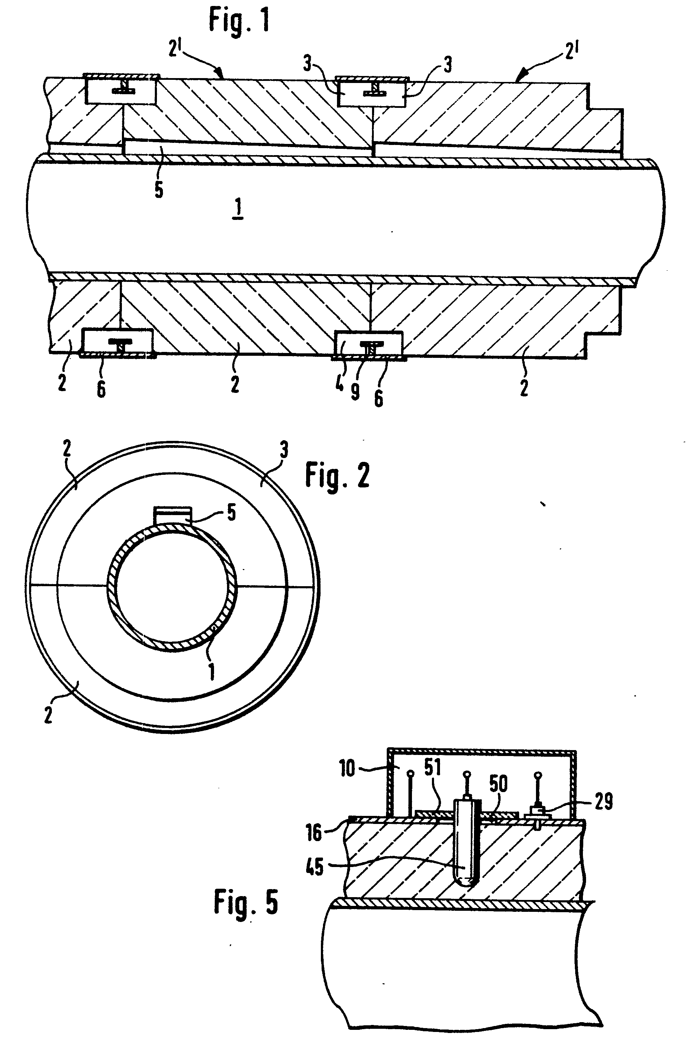

Die Fig. 1 und 2 zeigen eine Rohrleitung 1, z. B. eine Heißdampfleitung in einem Kernkraftwerk. Die Rohrleitung 1 ist durch eine Wärmeisoliermantel 2' gegen Wärmeverluste isoliert. Der Wärmeisoliermantel ist aus Isolierkassetten 2 aufgebaut. Die Isolierkassetten 2 enthalten eine Isolierpackung.

Die Isolierkassetten besitzen an ihren Stirnenden eine äußere Umfangsstufe 3, so daß jeweils zwischen zwei benachbarten Isolierkassetten 2 ein Meßkammer 4 begrenzt ist. Außerdem ist eine in axialer Richtung verlaufende Rinne 5 vorhanden, die als Expansionsraum für aus der Rohrleitung 1 austretendes Medium wirksam ist, so daß das ausleckende Medium möglichst schnell in die Meßkammer 4 geleitet wird.

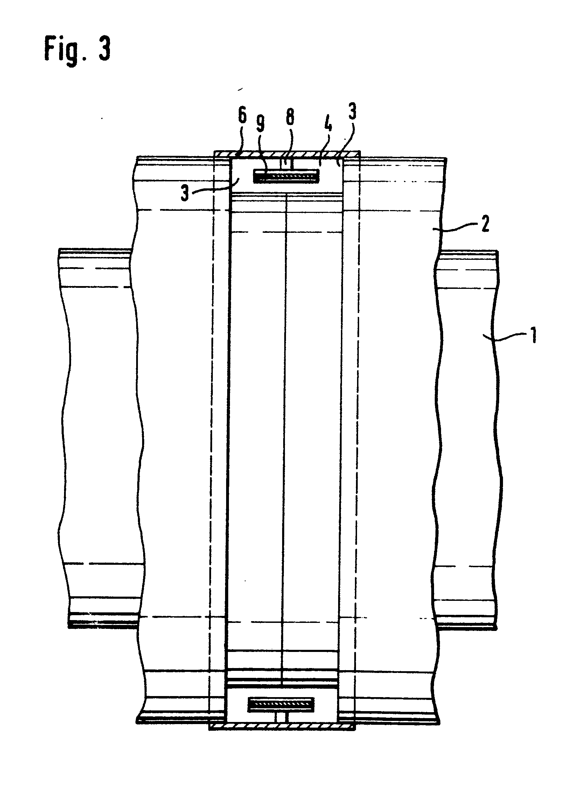

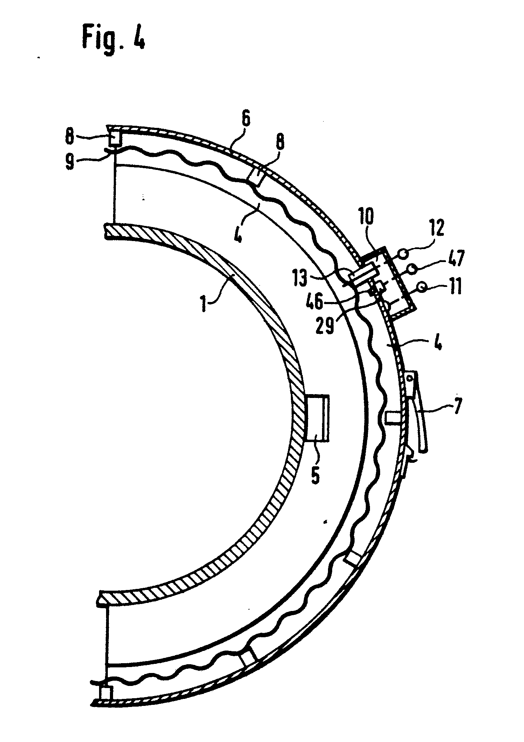

Eine als Ringsonde ausgebildete Meßsonde, die in Einzelheiten in den Fig. 3 und 4 dargestellt ist, umfaßt ein Spannband 6 mit einem Spannhebelverschluß 7. Das Spannband 8 hält die Isolierkassetten 2 zusammen, so daß keine gesonderte Halterung oder Befestigung der Isolierkassetten erforderlich ist. Außerdem dient das Spannband 6 aus Metall als eine Elektrode. An dem Spannband 6 ist mithilfe von Isolatoren 8 ein flexibles Band 9 gehalten, das ebenfalls ein Metallband ist und sich in einem Abstand von der Innenseite des Spannbandes 6 befindet. Die Ausbildung des Metallbandes als flexibles Band 9 ermöglicht, daß sich dasselbe dem jeweiligen ringförmigen Meßkammer 4, insbesondere dem jeweiligen Rohrdurchmesser, anpaßt. Anstelle eines Wellenbandes kann die zweite Elektrode auch aus Elektrodenabschnitten bestehen.

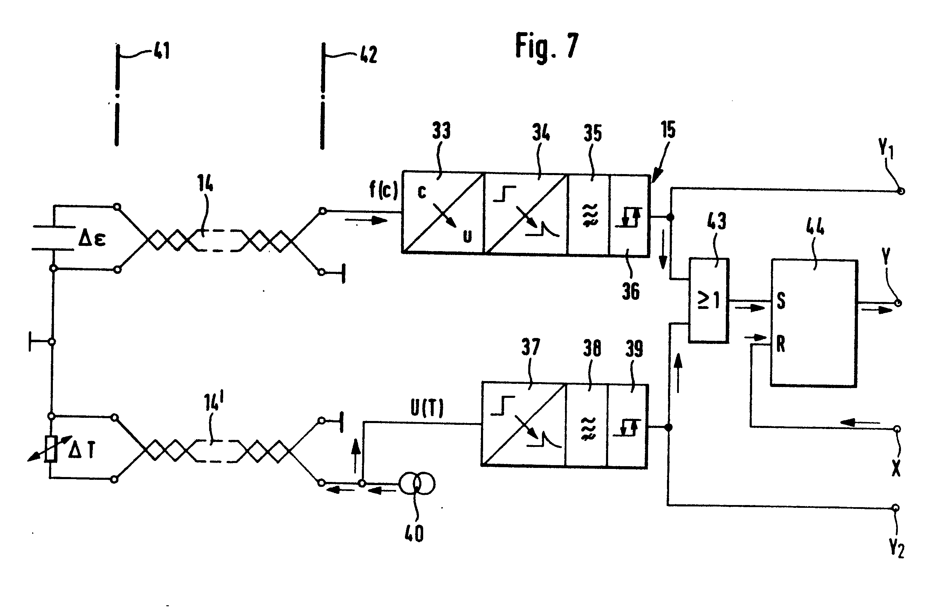

Auf dem Spannband 6 ist eine Anschlußkammer 10 vorgesehen, die eine mit dem Spannband 6 verbundene Anschlußklemme 11 und eine Anschlußklemme 12 aufweist, die durch einen Isolator 13 zu dem Wellenband 9 hindurchgeführt ist. An diese Anschlußklemmen 11 und 12 bzw. Anschlußbuchsen ist ein Meßkabel 14 angeschlossen, das zu einer Auswerteschaltung 15 führt, vgl. Fig. 7. Die elektrischen Anschlüsse können auch in einen Steckverbinder zusammengefaßt sein, so daß ein Einstecken der Meßleitung möglich ist. Die Auswerteschaltung 15 wird im einzelnen weiter unten erläutert. Außerdem ist innerhalb der Anschlußkammer 10 eine temperaturabhängige Diode (Thermodiode) 29 vorgesehen, die mit einem Bolzen 46 in das Spannband 6 eingeschraubt ist. Der Bolzen 46 und die Fassung der Thermodiode haben eine gute Wärmeleitfähigkeit, so daß die Thermodiode die Temperatur des Meßraumes mißt. Auch die Thermodiode 29 ist über eine Anschlußklemme 47 an die Auswerteschlatung angeschlossen.

Die beiden Elektroden aus dem Spannband 8 und dem flexiblen Band 9 bilden einen Kondensator, der innerhalb eines Schwingkreises eine Kapazität darstellt. Wenn Heißdampf austritt und in den Raum zwischen den Elektroden gelangt, ändert sich dadurch die Dielektrizitätskonstante zwischen den beiden Elektroden 6 und 9 und damit die Kapazität sprunghaft, so daß sich die Eigenfrequenz eines den Kondensator enthaltenden Schwingkreises ändert. Infolgedessen kann man durch Frequenzmessung eine Spannungsänderung ableiten.

Die Meßsonde wird auf der kalten Seite des Isoliermantels eingebaut, so daß jederzeit Arbeiten an der Meßsonde zu Wartungs- und/oder Reparaturzwecken möglich sind. Dies ist vor allem für die Dekontaminierung sehr wichtig.

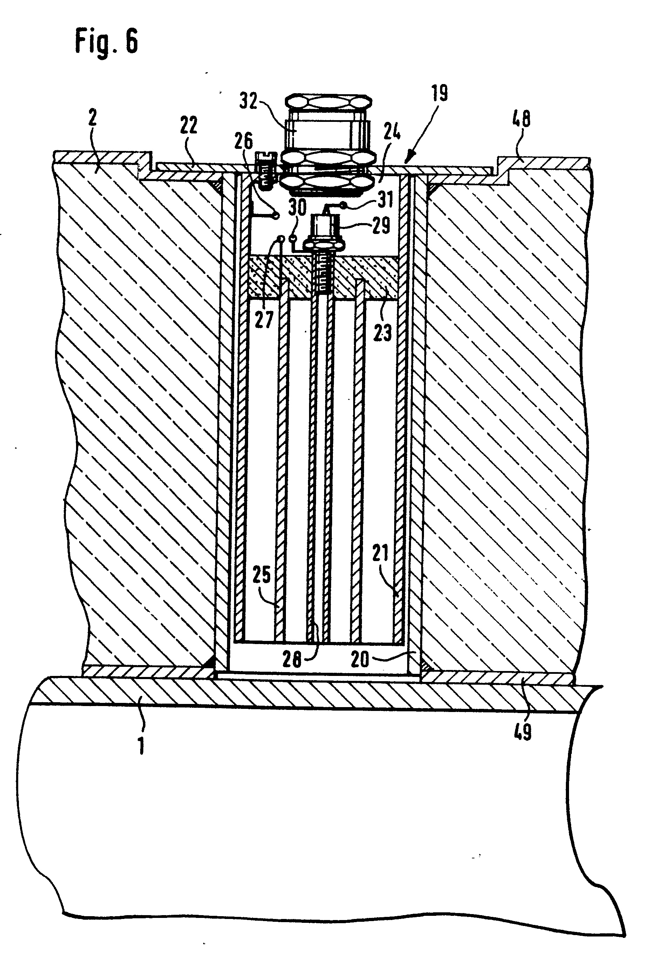

Eine weitere Ausführungsform einer Meßsonde 19 ist in Fig. 6 dargestellt. In einer Isolierkassette 2 ist ein Aufnahmerohr 20 vorgesehen, das von der Außenwandung 48 durch die Isolierkassette 2 hindurch bis zur Innenwandung 49 reicht. Die Meßsonde 19 umfaßt ein Außenrohr 21, dessen Außendurchmesser dem Innendurchmesser des Aufnahmerohrs 20 entspricht. Das Außenrohr 21 ist aus einer Stirnseite durch eine Abschlußscheibe 22 abgeschlossen. Innerhalb des Außenrohrs 21 ist eine Isolierplatte 23, z. B. eine Keramikplatte, vorgesehen, die eine Anschlußkammer 24 abtrennt. Innerhalb des Außenrohres 21 befindet sich ein Innenrohr 25 oder ein stabförmiger Kern. Außenrohr 21 und Innenrohr 25 bestehen aus einem metallischen Werkstoff und dienen als Elektroden. Diese Elektroden sind zu Anschlußklemmen 26, 27 innerhalb der Anschlußkammer 24 geführt.

Innerhalb der Meßsonde befindet sich ein Fühlrohr 28 als Temperaturfühler. Dasselbe kann auch als Elektrode benutzt werden. Dieses Fühlrohr 28 ist durch die Isolierplatte 23 hindurchgeführt und befindet sich in Wärmekontakt mit einer Thermodiode 29. Für die Temperaturmeßeinrichtung sind entsprechende Anschlußklemmen 30 und 31 vorgesehen. Die Anschlußkammer 24 ist durch eine Verschraubung 32 für das Meßkabel 14 abgeschlossen. Zur Festhaltung der Meßsonde 19 in dem Aufnahmerohr 20 dient ein Schnellverschluß, z. B. eine nicht dargestellte Kugelrastung.

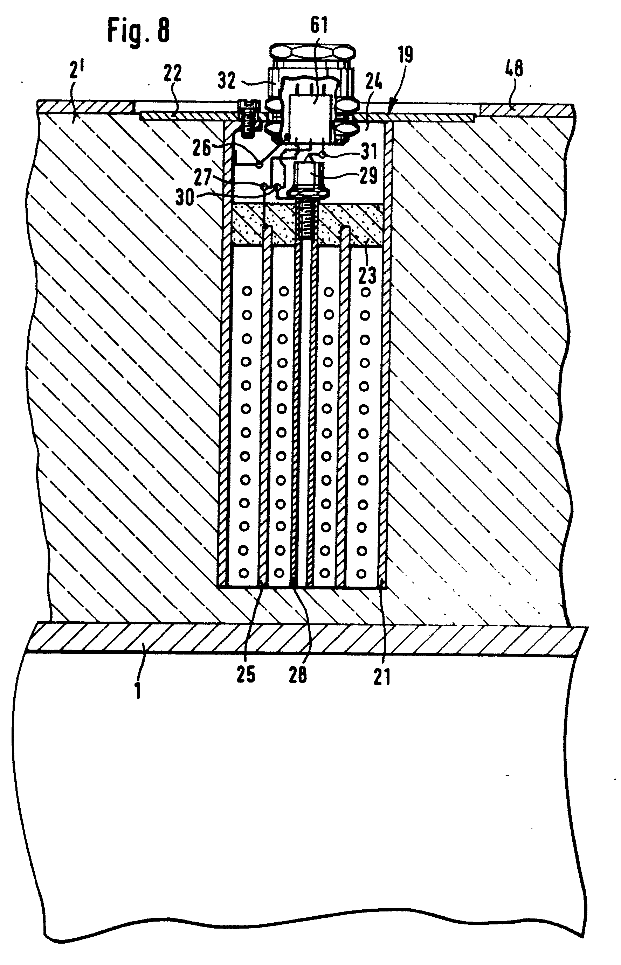

Fig. 8 zeigt eine abgewandelte Ausführungsform einer Meßsonde. Es ist hier ein vor Ort gefertigter Isoliermantel vorhanden. Zum Einbau einer Meßsonde wird ein Loch aus dem Isoliermaterial ausgenommen. In dasselbe wird die Meßsonde eingeschoben, so daß das Außenrohr 21 unmittelbar an dem Isoliermaterial liegt. Das Außenrohr weist Perforierungen in Form von Durchbrüchen 62 auf, damit ausleckendes Medium möglichst momentan in die Meßkammer gelangt. Die Anschlußklemmen sind mit den Steckhülsen eines Steckverbinders 61 verbunden, so daß ein Stecker der Meßleitung eingesteckt werden kann.

Fig. 5 zeigt eine weitere Ausführungsform einer Meßsonde. Innerhalb einer Anschlußkammer 10 befindet sich ein Durchgang 50 durch die Mantelwandung 16. Der Durchgang 50 erlaubt die isolierte Einführung einer Stiftelektrode 45, die z. B. durch eine Isolierscheibe 51 gehalten ist. Die Anschlüsse sind in entsprechender Weise vorhanden.

Die Meßsonde 19 steht mit ihrer offenen Stirnseite dem Mantel der Rohrleitung 1 gegenüber, so daß ausleckendes Medium momentan erfaßt wird. Ausleckender Heißdampf, austretendes Wasser oder Kondenswasser verändert kurzfristig die Dielektrizitätskonstante $\varepsilon$ zwischen dem Außenrohr 21 und dem Innenrohr 25. Entsprechend dieser Änderung $\Delta\varepsilon$ erhält man nach Fig. 7 auf der Meßleitung 14 als Signal f(c) eine Schwingung mit von der Dielektrizitätskonstanten abhängiger Frequenz, da der aus den Elektroden 21 und 25 gebildete Kondensator Bestandteil eines Schwingkreises ist. Dieses Signal wird in einem Frequenz-Spannungs-Wandler 33 in eine Meßspannung u umgewandelt. In einer Differentiationsstufe 34 wird das Spannungssignal u mit einer Zeitkonstanten zwischen 0,5 und 10 min differenziert. Das differenzierte Signal erreicht über einen Siebkreis 35 eine Schwellenwertschaltung 36. Durch die Differentiationsstufe 34 sind Langzeitschwankungen aus dem Meßsignal ausgesiebt. Solche Langzeitschwankungen entstehen etwa durch Änderungen der Luftfeuchtigkeit oder Feuchtigkeitsänderungen während des Anfahrbetriebes. Das Signal der Schwellenwertschatung 36 steht an einem Ausgang $Y_1$ unmittelbar zur Verfügung und kann in einer zentralen Auslöseschaltung ausgewertet werden.

In dem Temperaturfühler wird eine Temperaturänderung $\Delta T$ erfaßt. Über ein Meßkabel 14 wird eine temperaturabhängige Spannung U(T) zu einer Differentiationsstufe 37 übertragen. Auch diese Differentiationsstufe 37 arbeitet mit einer entsprechenden Zeitkonstanten. Über einen Siebkreis 38 wird eine Schwellenwertschaltung 39 angesteuert. Die gesamte Meßeinrichtung wird von einer Stromquelle 40 gespeist. Das Temperatursignal steht an einem weiteren Ausgang $Y_2$ zur weiteren Auswertung bereit.

Die Linien 41 und 42 teilen innerhalb des Schaltbildes nach Fig. 7 den Bereich der Meßsonden, den Bereich der Meßkabel und den Bereich der Auswerteschaltung voneinander ab. Die Meßsonden sind über kurze Wege mit den Auswerteschaltungen verbunden. Jeweils eine Anzahl von Auswerteschaltungem sind zu einer Baugruppe zusammengefaßt. Die Ausgänge der Auswerteschaltungen sind zu einer zentralen Elektronik geführt.

Die Ausgänge der Schwellenwertschaltungen 36 und 39 stellen zwei unabhängige Signale zur Verfügung. Dieselbe können nach unterschiedlichen Auswertefunktionen zusammengefaßt werden.

Die Erfindung ermöglichst somit eine wirkungsvolle zentrale Überwachung eines Rohrleitungsnetzes, insbesondere einer Dampferzeugungsanlage. Es können zahlreiche Meßstellen längs der Rohrleitung verteilt sein. Die Meßstellen sind gruppenweise mit Auswerteschaltungen verbunden. Dieselben sind an eine zentrale Auswerteschaltung angeschlossen. Dort wird der Zustand der einzelnen Meßstellen und eine etwaige Alarmanzeige registriert. Es ist somit eine zentrale Störmeldungserfassung und Auslösung möglich.

Die Meßsonden sind aus anorganische, resistenten Werkstoffen aufgebaut, insbesondere Werkstoffen, die in Reinigungsbädern resistent sind. Die Werkstoffe der Meßsonde lassen sich so auswählen, daß die Bildung eines galvanischen Elements innerhalb der Meßsonde ausgeschlossen ist. Infolgedessen können auch bei feuchter Umgebung keine Schädigungen der Meßsonde auftreten.

## Ansprüche

1. Kontrollsystem zur Lecküberwachung von mit einem Wärmeisoliermantel umkleideten Rohrleitungen, bei dem abschnittweise Meßsonden mit je zwei Elektroden (6, 9) angeordnet sind, die an eine Meßschaltung (15) angeschlossen sind, gekennzeichnet durch folgende Merkmale :

a) der Wärmeisoliermantel (2') weist nach der Außenseite offene Meßkammern (4) auf ;

b) die Meßsonden sind lösbar in die Meßkammern (4) einsetzbar ;

c) jede Meßsonde besitzt einen Steckverbinder (61) oder Anschlußklemmen (11, 12, 47) zur Verbindung mit der Meßschaltung ;

d) die Elektroden (6, 9) bilden ein frequenzbestimmendes Element eines Oszillators.

2. Kontrollsystem nach Anspruch 1, dadurch gekennzeichnet, daß Isolierkassetten (2) des Wärmeisoliermantels an ihren Stirnenden äußere Umfangsstufen (3) aufweisen, wobei die einander zugewandten Umfangsstufen (3) benachbarter Isolierkassetten (2) die Meßkammer (4) ringförmig ausbilden, daß ein als erste Elektrode dienendes, metallisches Spannband (6) die Meßkammer (4) überdeckt und mit einem Spannhebelverschluß (7) verschlossen ist und daß die zweite Elektrode (9) durch an dem Spannband (6) befestige Isolatoren (8) getragen ist.

3. Kontrollsystem nach Anspruch 2, dadurch gekennzeichnet, daß die zweite Elektrode (9) flexibel ausgebildet ist.

4. Kontrollsystem nach Anspruch 1, dadurch gekennzeichnet, daß in den Wärmeisoliermantel (2') ein gegebenenfalls durch ein Aufnahmerohr (20) ausgekleidetes Loch eingebracht ist und daß eine rohrförmige Meßsonde (19) mit einer Außenelektrode (21) und eine inneren Elektrode (25) oder einer Stiftelektrode (45) in die durch das Loch gebildete Meßkammer (4) eingesetzt ist.

5. Kontrollsystem nach einem der Ansprüche 2 bis 4, dadurch gekennzeichnet, daß innerhalb der Meßkammer (4) ein Temperaturfühler (28, 29) angeordnet ist, der eine temperaturabhängige elektrische Meßspannung abgibt.

6. Kontrollsystem nach einem der Ansprüche 1 bis 5, dadurch gekennzeichnet, daß die Elektroden (6, 9) mindestens teilweise perforiert sind.

7. Kontrollsystem nach einem der Ansprüche 1 bis 6, dadurch gekennzeichnet, daß die Bauteile der Meßsonde aus nichtporösen, chemisch resistenten, anorganischen Werkstoffen bestehen.

8. Kontrollsystem nach Anspruch 7, dadurch gekennzeichnet, daß die Werkstoffe der Meßsonde so ausgewählt sind, daß sie kein galvanisches Element bilden.

9. Kontrollsystem nach einem der Ansprüche 1 bis 8, dadurch gekennzeichnet, daß innerhalb des Wärmeisoliermantels (2) in radialer oder axialer Richtung der Rohrleitung verlaufende Expansionsräume (5) vorgesehen sind, von denen Durchgänge zu der Meßkammer (4) führen.

10. Kontrollsystem nach einem der Ansprüche 1 bis 9, dadurch gekennzeichnet, daß die Meßschaltung (15) einen Frequenz-Spannungs-Wandler (33) umfaßt, daß der Ausgang des Frequenz-Spannungs-Wandlers an eine Differentiationsstufe (34) mit einer Zeitkonstanten zwischen 0,5 und 10 min angeschlossen ist und daß die differenzierte Spannung an eine Schwellenwertschaltung (36) mit nachgeschalteter Alarmstufe und/oder Auslösestufe angeschlossen ist.

11. Kontrollsystem nach Anspruch 10, dadurch gekennzeichnet, daß der Temperaturfühler ebenfalls an eine Differentiationstufe (37) angeschlossen ist und daß deren Ausgang mit einer Schwellenwertschaltung (39) und nachgeschalteter Alarmstufe und/oder Auslösestufe verbunden ist.

12. Kontrollsystem nach Anspruch 10 und 11, dadurch gekennzeichnet, daß die Ausgänge der Schwellenwertschaltungen (36, 39) in einer Oder-Schaltung (43) verknüpft sind, an die eine Alarmstufe und/oder Auslösestufe angeschlossen ist.

## Claims

1. A control system for the detection of leaks in pipes surrounded by a heat insulating jackets and having measuring probes, each with two electrodes (6, 9), arranged at sectional intervals and connected to a measuring circuit (25), characterized by the following features :

a) the heat insulating jacket (2') has radially open measuring chambers (4) ;

b) the measuring probes are removably insertable into the measuring chambers (4) ;

c) each measuring probe has a plug connector (61) or connection terminals (11, 12, 47) for the connection with the measuring circuit ;

d) the electrodes (6, 9) serve as a frequency-determining element in an oscillator.

2. A control system in accordance with claim 1, characterized in that insulating cassettes (2) of the heat insulating jacket have peripheral recesses (3) on their axial extremities so that the peripheral recesses (3) of adjoining insulating cassettes (2) form an annular measuring chamber (4), that the measuring chamber (4) is covered by a metallic clamping collar (6) wich has a clamping lever lock (7) and wich serves as a first electrode, and that a second electrode (9) is carried by insulating spacers (8) which are attached to the clamping collar (6).

3. A control system in accordance with claim 2, characterized in that the second electrode (9) is a flexible electrode.

4. A control system in accordance with claim 1, characterized in that the heat insulating jacket (21) has an opening which, in certain cases, may be lined with a receiving tube (20) and that a tubelike measuring probe (19) with an outer sleeve electrode (21) and either an inner sleeve electrode (25) or a pin electrode (45) is inserted into the measuring chamber (4) formed by said opening.

5. A control system in accordance with one of the claims 2 through 4, characterized in that inside the measuring chamber (4) is arranged a temperature sensor (28, 29) which produces a temperature responsive signal voltage.

6. A control system in accordance with one of the claims 1 through 5, characterized in that the electrodes (6, 9) are, at least in part, perforated.

7. A control system in accordance with one of the claims 1 through 6, characterized in that the components of the measuring probe consist of non-porous chemically resistant anorganic materials.

8. A control system in accordance with claim 7, characterized in that the materials for the measuring probe are selected in such a way that they do not form a galvanic cell.

9. A control system in accordance with one of the claims 1 through 8, characterized in that the heat insulating jacket (21) has arranged within it expansion channels (5) which extend in the radial or axial direction of the pipe and have passages to the measuring chamber (4).

10. A control system in accordance with one of the claims 1 through 9, characterized in that the measuring circuit (15) comprises a frequency-to-voltage converter (33), that the exit of the frequency-to-voltage converter is connected to a differenting stage (34) with a time constant between 0,5 and 10 minutes, and that the differentiated voltage is connected to a threshold circuit (36) which is linked to an alarm stage and/or a shutdown stage.

11. A control system in accordance with claim 10, characterized in that the temperature sensor is also connected to a differenting stage (37) and that the exit of the latter is connected to a threshold circuit (39) which is linked to an alarm stage and/or a shutdown stage.

12. A control system in accordance with claims 10 and 11, characterized in that the exits of the threshold circuits (36, 39) are joined through an OR-gate (43) to which is connected an alarm stage and/or a shutdown stage.

**Revendications**

1. Système de contrôle pour la surveillance de fuites dans des conduits revêtus d'une gaine thermiquement isolante, dans lequel, par sections, sont agencées des sondes de mesure présentant chacune deux électrodes (6, 9) qui sont raccordées à un circuit de mesure (15), caractérisé par les particularités suivantes :

a) la gaine thermiquement isolante (2') présente du côté extérieur des chambres de mesure ouvertes (4) ;

b) les sondes de mesure peuvent être mises en œuvre de manière détachable dans les chambres de mesure (4) ;

c) chaque sonde de mesure présente un connecteur à fiches (61) ou des bornes de raccordement (11, 12, 47) pour la connexion au circuit de mesure ;

d) les électrodes (6, 9) forment un élément de détermination de fréquence d'un oscillateur.

2. Système de contrôle suivant la revendication 1, caractérisé en ce que des caissons isolants (2) de la gaine thermiquement isolante présentent, à leurs extrémités frontales, des gradins périphériques externes (3), les gradins périphériques (3), mutuellement adjacents, de caissons isolants voisins (2) réalisant la chambre de mesure (4) sous une forme annulaire, en ce qu'une bande de serrage (6) métallique, qui sert de première électrode, recouvre la chambre de mesure (4) et est fermée par une fermeture à levier de serrage (7), et en ce que la deuxième électrode (9) est supportée par des isolateurs (8) fixés sur la bande de serrage (6).

3. Système de contrôle suivant la revendication 2, caractérisé en ce que la deuxième électrode (9) est façonnée sous une forme flexible.

4. Système de contrôle suivant la revendication 1, caractérisé en ce qu'un trou éventuellement revêtu d'un tube de réception (20) est façonné dans la gaine thermiquement isolante (2') et en ce qu'une sonde de mesure tubulaire (19) présentant une électrode externe (21) et une électrode interne (25) ou une électrode à broche (45) est introduite dans la chambre de mesure (4) formée par le trou.

5. Système de contrôle suivant l'une des revendications 2 à 4, caractérisé en ce qu'un détecteur de température (28, 29), qui fournit une tension électrique de mesure dépendant de la température, est agencé à l'intérieur de la chambre de mesure (4).

6. Système de contrôle suivant l'une des revendications 1 à 5, caractérisé en ce que les électrodes (6, 9) sont au moins partiellement perforées.

7. Système de contrôle suivant l'une des revendications 1 à 6, caractérisé en ce que les pièces de construction de la sonde de mesure sont constituées de matériaux non poreux, chimiquement résistants, inorganiques.

8. Système de contrôle suivant la revendication 7, caractérisé en ce que les matériaux de la sonde de mesure sont sélectionnés de façon qu'ils ne forment pas d'élément galvanique.

9. Système de contrôle suivant l'une des revendications 1 à 8, caractérisé en ce qu'à l'intérieur de la gaine thermiquement isolante (2) sont prévues des chambres d'expansion (5) qui sont disposées suivant une direction radiale ou axiale du conduit et à partir desquelles des passages mènent à la chambre de mesure (4).

10. Système de contrôle suivant l'une des revendications 1 à 9, caractérisé en ce que le circuit de mesure (15) comprend un transformateur de fréquence-tension (33), en ce que la sortie du transformateur de fréquence-tension est raccordée à un étage de différentiation (34) présentant une constante de temps entre 0,5 et 10 minutes et en ce que la tension différentiée est raccordée à un circuit à valeur de seuil (36) pourvu d'un étage d'alarme et/ou de déclenchement monté à la suite.

11. Système de contrôle suivant la revendication 10, caractérisé en ce que le détecteur de température est également raccordé à un étage de différentiation (37) et en ce que sa sortie est connectée à un circuit à valeur de seuil (39) et à un étage d'alarme et/ou de déclenchement monté à la suite.

12. Système de contrôle suivant l'une des revendications 10 et 11, caractérisé en ce que les sorties des circuits à valeur de seuil (36, 39) sont enchaînées dans un circuit OU (43) auquel un étage d'alarme et/ou de déclenchement est raccordé.

**Fig. 1**

**Fig. 2**

**Fig. 5**

# Fig. 3

## Fig. 4

Fig. 6

Fig. 7

Fig. 8